# FASCICULE DE BREVET EUROPEEN

(11) **EP 1 286 583 B1**
(45) Date de publication et mention de la délivrance du brevet: **06.04.2005**
(21) Numéro de dépôt: 01940680.0
(22) Date de dépôt: 05.06.2001
(51) Int. Cl.: A01G 9/24

(54) **SERRE HORTICOLE DEBACH BLE**
GEWÄCHSHAUS MIT VERSCHIEBBARER ABDECKPLANE
HORTICULTURAL GREENHOUSE WITH REMOVABLE COVER

(30) Priorité: 08.06.2000 FR 0007314
(43) Date de publication de la demande: 05.03.2003
(73) Titulaire: Mercurio, Joseph, 13750 Plan d'Orgon (FR); Mercurio, David, 13300 Salon de Provence (FR)
(72) Inventeur: Mercurio, Joseph, 13750 Plan d'Orgon (FR); Mercurio, David, 13300 Salon de Provence (FR)
(74) Mandataire: Marchand, André
(86) Numéro de dépôt international: PCT/FR2001/001721
(87) Numéro de publication internationale: WO 2001/093663

(56) Documents cités:
- EP-A- 0 260 480
- DE-U- 9 017 542
- DE-U- 9 103 345
- FR-A- 2 431 827
- FR-A- 2 801 622
- GB-A- 2 194 271
- US-A- 4 348 833
- US-A- 5 038 517

## Description

La présente invention concerne un système de bâche enroulable, notamment pour l'aération et la régulation en température des serres horticoles, ainsi qu'une serre horticole pourvue d'un tel système de bâche.

Dans les régions à climat tempéré, les serres constituent un moyen indispensable à la culture de certaines variétés de plantes, fruits ou légumes. Ainsi, il est fréquent que de grands domaines agricoles soient équipés de plusieurs dizaines de serres horticoles assurant une protection des espèces cultivées contre le froid, de telles serres pouvant présenter une longueur d'une centaine de mètres et une largeur d'une dizaine de mètres.

Afin d'assurer une régulation de la température de la serre nécessaire à la croissance des espèces cultivées, de nombreuses serres dites "débachâbles" sont équipées d'ouvrants permettant de les aérer lorsque la température devient trop élevée sous l'effet du soleil.

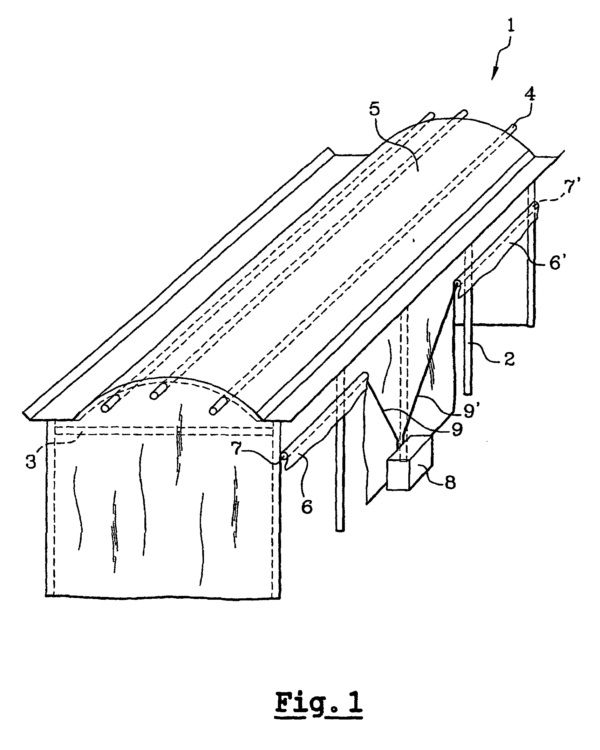

A titre d'exemple, la figure 1 représente schématiquement un modèle de serre 1 répandu comprenant une structure ou ossature réalisée par assemblage de montants 2, de traverses 3 et de longerons 4, recouverte par une bâche 5 en matière plastique transparent, les parois verticales de la serre étant formées par un matériau rigide ou semi-rigide fixé aux montants. La bâche 5 peut être du type simple membrane ou du type double membrane, les bâches à double membrane étant gonflables et offrant une isolation thermique et une tenue au vent meilleures que les bâches simple membrane.

La serre 1 présente sur chacun de ses grands côtés deux ouvertures équipées de sortes de "rideaux" électriques, constitués par des bâches 6, 6' enroulées sur des axes 7, 7'. Les axes 7, 7' sont entraînés par un moteur électrique 8 par l'intermédiaire de deux cardans 9, 9'. Le moteur 8 est lui-même commandé par un système de régulation de température (non représenté) qui enroule ou déroule les bâches 6, 6' en fonction de la température de la serre.

Ce type de serre à régulation automatique présente l'inconvénient de nécessiter au moins deux moteurs par serre. L'aménagement d'une exploitation agricole comprenant de nombreuses serres de ce type nécessite ainsi l'achat et l'entretien d'un grand nombre de moteurs et l'installation d'un réseau complexe de câbles de distribution de l'électricité.

On connaît également des modèles de serres présentant des ouvrants motorisés agencés sur le toit, qui peuvent être pilotés par un seul moteur. Toutefois, de tels ouvrants nécessitent un système complexe de crémaillères pour dérouler ou enrouler des bâches dans un plan sensiblement horizontal.

De façon générale, les bâches enroulables des ouvrants de serres, qu'elles soient agencées sur les parois ou sur les toits des serres, présentent l'inconvénient d'être molles et peu résistantes au vent, tandis que la bâche fixe couvrant le reste d'une serre peut être choisie du type gonflable à double membrane.

Un autre inconvénient des systèmes de bâches enroulables connus est qu'ils nécessitent au moins un moteur par serre, en raison des pertes mécaniques par frottement intervenant dans les éléments de transmission comme les cardans et les crémaillères.

Le document DE9103345 décrit une serre pourvue d'une bâche à double membrane [3, 4] dans laquelle l'enroulement et le déroulement de la bâche est assuré par un enrouleur automatique constitué par deux chariots électriques [8, 9] montés sur des galets [23] qui roulent sur des rails de guidage [22]. Ces chariots d'enroulement et de déroulement sont solidaires d'un cylindre d'enroulement [21] par l'intermédiaire d'un moteur de cylindre [19] du type moteur de store, équipé d'un frein moteur. La bâche gonflable est reliée à la sortie d'un générateur de pression [15, 16] par l'intermédiaire d'orifices [17]. La pression dans la bâche est régulée en fonction des conditions climatiques pour assurer un isolement thermique plus ou moins important. Le gonflage de la bâche est effectué quand la position de butée est atteinte afin de créer un espace d'isolation thermique [5]. Outre les chariots d'enroulement et de déroulement, ce système de bâche selon l'art antérieur est équipé d'un système de rappel comprenant une cordelette [25] et un contre-poids [26] qui tirent les chariots [8, 9] dans une direction de déroulement. On observe également sur la figure 2 de ce document que la position de la bâche est telle que le déroulement se fait en direction de la partie basse du plan incliné sur lequel repose la bâche, de sorte que trois moyens interviennent dans le déroulement de la bâche : d'une part les enrouleurs automatiques ou chariots motorisés [8, 9], d'autre part les contre-poids [26] attachés aux chariots par les cordelettes [25], et enfin la gravité elle-même, en raison de l'agencement de la bâche qui vient d'être mentionné. Ce document décrit ainsi un système de bâche motorisé en soi conventionnel, d'une grande complexité et d'un prix de revient non négligeable, dans lequel la bâche est une bâche gonflable à double membrane au lieu d'être une bâche à simple membrane.

Ainsi, un objectif général de 1a présente invention est de prévoir un système de bâche enroulable qui soit aisé à dérouler tout en étant d'une structure simple et qui présente une bonne résistance au vent.

Pour atteindre cet objectif, la présente invention prévoit un système de bâche enroulable comprenant une bâche présentant un bord fixe et un bord libre solidaire d'un axe d'enroulement, la bâche étant du type gonflable à double membrane, dans lequel le déroulement de la bâche est assuré en tout ou en partie par gonflage de la bâche, la pression de gonflage apparaissant dans la bâche assurant le déroulement de la bâche ou participant à l'effort de déroulement comme défini dans la revendication 1.

Selon un mode de réalisation, le déroulement de la bâche est assuré exclusivement par gonflage de la bâche, le bord libre de la bâche n'étant solidaire d'aucun moyen de déroulement.

Selon un mode de réalisation, toute la surface utile de la bâche est du type gonflable à double membrane.

Selon un mode de réalisation, la bâche comprend au moins une partie non gonflable et au moins une partie gonflable à double membrane s'étendant entre le bord fixe et le bord libre de la bâche.

Une telle bâche gonflable présente divers avantages. D'une part, la bâche présente une bonne rigidité conférée par son gonflage et peut être agencée sur des toits de serre sans flotter ni claquer au vent, de sorte qu'il n'est pas nécessaire de prévoir un mécanisme maintenant la bâche sous tension. Pour maintenir la bâche contre une structure de toit, il suffit de prévoir des lanières classiques ou tout moyen de maintien équivalent, par exemple un filet. D'autre part, un déroulement de la bâche sous l'effet du gonflage nécessite une énergie mécanique réduite de sorte qu'un seul compresseur d'air peut permettre de dérouler plusieurs bâches agencées sur des serres différentes. Enfin, la prévision d'un déroulement automatique de la bâche sous l'effet exclusif du gonflage permet de prévoir un système d'enroulement de bâche d'une structure simple, qui fonctionne en "suiveur" pendant le déroulement de la bâche, un tel système d'enroulement nécessitant également une énergie mécanique réduite en raison de sa simplicité.

Ainsi, selon un aspect de la présente invention, l'enroulement de la bâche est assuré par un système à câbles agencé pour tirer l'axe d'enroulement dans une direction d'enroulement de la bâche tout en faisant tourner l'axe d'enroulement dans un sens d'enroulement de la bâche.

Selon un mode de réalisation, la bâche est agencée dans un plan incliné, et est agencée de manière que le bord libre de la bâche se déplace vers le haut du plan incliné lors d'un déroulement de la bâche.

La présente invention concerne également une serre horticole, comprenant au moins un système de bâche selon l'invention, le bord fixe de la bâche étant solidaire de la structure de la serre.

Selon un mode de réalisation, la bâche repose sur des éléments du faîtage de la serre et est plaquée contre ces éléments par des moyens de maintien.

Selon un mode de réalisation, la serre comprend un système d'enroulement de la bâche comprenant un câble de traction pour tirer l'axe d'enroulement dans une direction d'enroulement de la bâche, et un câble de rotation pour faire tourner l'axe d'enroulement dans un sens d'enroulement de la bâche.

Selon un mode de réalisation, les câbles de traction et de rotation coopèrent en enroulement avec des poulies choisies de forme tronconique pour compenser l'épaisseur croissante de la bâche lors de son enroulement autour de l'axe d'enroulement.

Selon un mode de réalisation, la serre comprend au moins un compresseur pour le déroulement de la bâche par gonflage, des moyens de contrôle de la pression d'air dans la bâche, un système d'enroulement de la bâche, au moins une valve de décompression de la bâche, au moins un moteur électrique pour entraîner le système d'enroulement, et des moyens de régulation de la température de la serre, pilotant le compresseur, le moteur et la valve pour enrouler ou dérouler la bâche en fonction de l'écart entre la température dans la serre et une température souhaitée.

La présente invention prévoit également un ensemble de serres comprenant au moins deux serres selon l'invention, les serres comprenant des arbres d'entraînement de systèmes d'enroulement de bâches qui sont couplés en rotation au moyen d'une courroie ou d'une chaîne.

Ces objets, caractéristiques et avantages ainsi que d'autres de la présente l'invention seront exposés plus en détail dans la description suivante d'une serre pourvue d'un système de bâche selon l'invention, faite à titre non limitatif en relation avec les figures jointes parmi lesquelles :
- la figure 1 précédemment décrite représente une serre classique pourvue d'ouvrants motorisés,
- la figure 2 est une vue en perspective d'une serre selon l'invention,
- les figures 3A et 3B sont des vues en coupe d'un système de bâche selon l'invention, respectivement dans une position enroulée et une position déroulée,
- les figures 4A et 4B sont des vues en perspective d'un système d'enroulement de bâche selon l'invention, respectivement dans une position déroulée et dans une position enroulée,
- la figure 5 est une vue en coupe d'une pièce de maintien du bord fixe d'une bâche selon l'invention,
- la figure 6 est une vue en coupe d'un axe d'enroulement d'une bâche selon l'invention,
- la figure 7 représente une poulie tronconique selon l'invention, et
- la figure 8 représente un ensemble de serres selon l'invention.

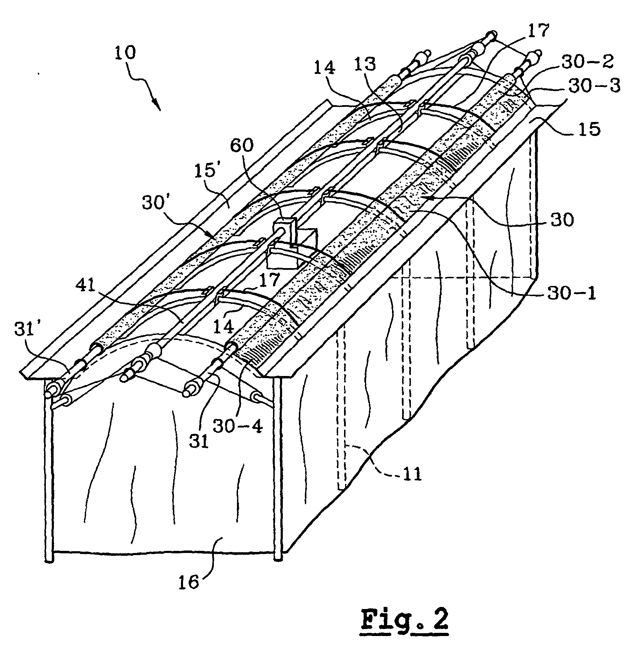

La figure 2 est une vue d'ensemble d'une serre 10 selon l'invention, qui comprend classiquement une structure ou ossature formée par assemblage de montants 11, de traverses et de longerons 13, le faîtage de la serre étant formé ici par des arceaux 14 fixés sur les traverses ou sur les montants. Des chéneaux 15, 15' sont agencés le long des bords du faîtage de la serre pour éviter le ruissellement de l'eau de pluie sur les parois verticales de la serre, qui sont recouvertes par une toile ou une bâche 16 ou tout autre matériau pour serre rigide ou semi-rigide.

Le faîtage de la serre est recouvert par une bâche 30 selon l'invention posée sur les arceaux 14 et maintenue contre ceux-ci par des lanières 17 agencées à intervalles réguliers sur le faîtage. La bâche 30 est agencée ici longitudinalement et comprend un bord fixe 30-1 attaché au chéneau droit 15 et un bord libre 30-2 s'étendant en direction du sommet de la serre 10. Le bord libre 30-2 de la bâche est solidaire d'un axe 31 permettant d'enrouler la bâche 30 en direction du chéneau droit 15 afin d'ouvrir le faîtage pour rafraîchissement de la serre. Le faîtage est également recouvert par une deuxième bâche 30' similaire à la bâche 30, s'étendant entre le chéneau gauche 15' et le sommet de la serre et s'enroulant autour d'un axe 31' pour ouvrir l'autre moitié du faîtage.

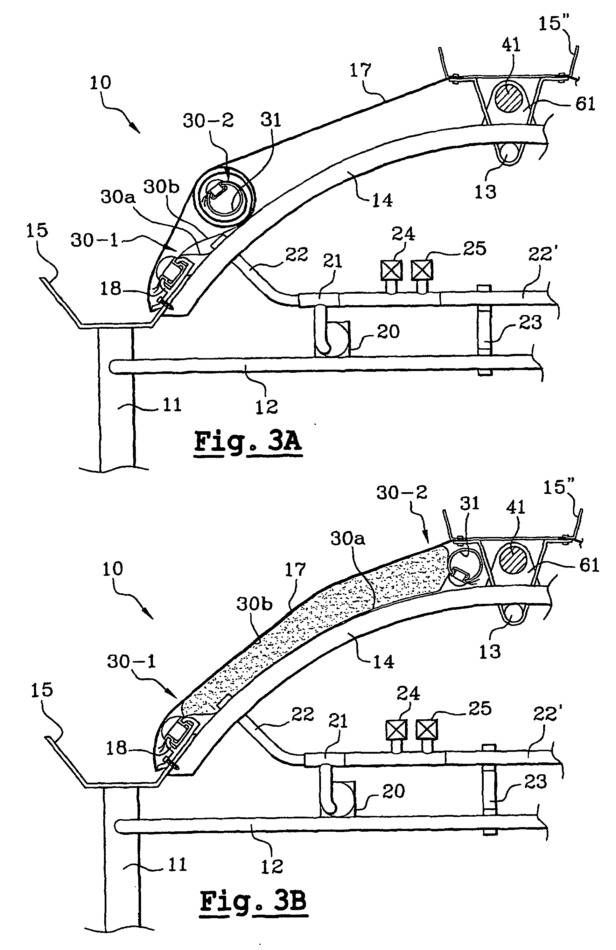

Selon l'invention, la bâche 30 est du type gonflable et se déroule par gonflage, le gonflage ayant pour effet de pousser le bord libre 30-2 de la bâche en direction du sommet de la serre, en entraînant l'axe d'enroulement 31, comme cela apparaîtra plus clairement en se référant aux figures 3A et 3B.

La figure 3A est une vue en coupe de la bâche 30 en position enroulée. Le rouleau formé par la bâche enroulée autour de l'axe 31 est maintenu contre les arceaux 14 par les lanières 17, qui sont ici accrochées entre le chéneau latéral 15 et un chéneau central 15" placé au sommet de la serre. Ce chéneau central 15", qui n'a pas été représenté en figure 2 pour des raisons de clarté de la figure, est fixé sur le longeron central 13 du faîtage.

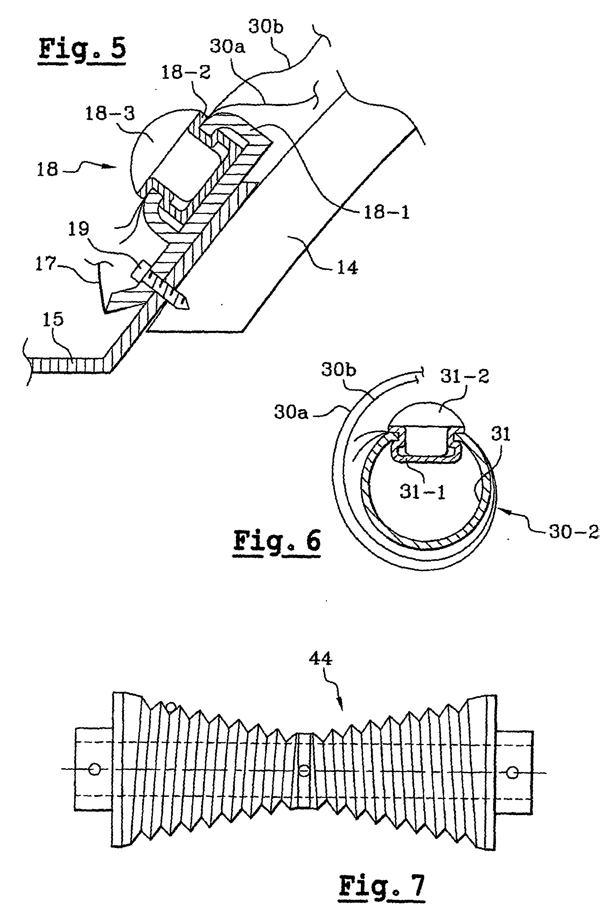

Sur la figure 3A, on voit que la bâche 30 est: constituée par deux membranes 30a, 30b qui sont maintenues et pincées de façon étanche du côté du bord fixe 30-1 de la bâche par une pièce 18 solidaire d'un bord du chéneau 15, la pièce 18 s'étendant sur toute la longueur de la serre. Comme cela apparaît plus clairement en figure 5, la pièce de maintien 18 est vissée sur les arceaux 14 par des vis auto-taraudeuses 19 qui traversent le bord du chéneau 15 et maintiennent simultanément ce dernier. La pièce 18 présente un profil 18-1 en forme de "U" élargi à sa base et les membranes 30a, 30b sont pincées dans le profil 18-1 par une pince élastique ou clip 18-2. Le clip 18-2 est enfoncé dans le profil 18-1 et bloqué dans cette position au moyen d'une pièce 18-3 qui le maintient écarté.

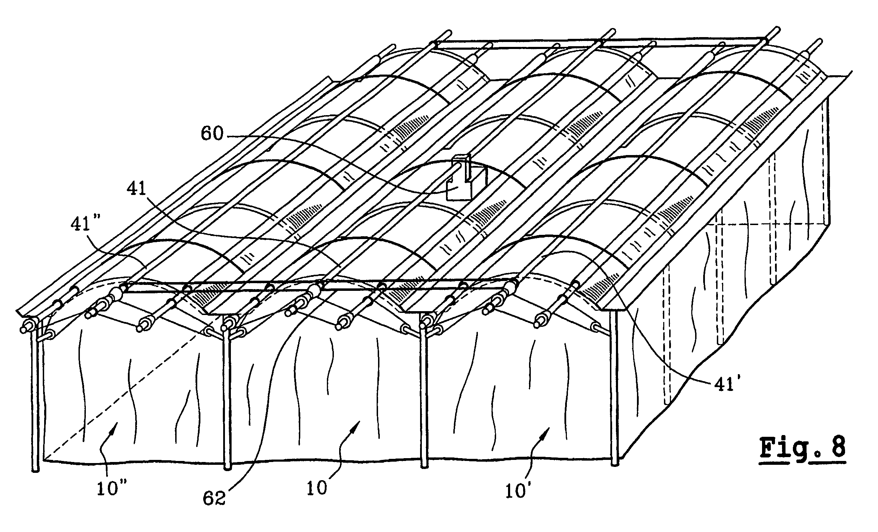

Du côté du bord libre 30-2 de la bâche, les membranes 30a, 30b sont également pincées de façon étanche dans l'axe d'enroulement 31. Comme cela apparaît plus clairement en figure 6, le pincement des membranes 30a, 30b dans l'axe 31 est assuré également par un clip 31-1 qui pénètre dans une gorge pratiquée dans l'axe 31 et est bloqué dans la gorge par une pièce 31-2 le maintenant écarté.

Sur les bords latéraux 30-3, 30-4 de la bâche 30, visibles en figure 2, les bords des membranes 30a, 30b sont assemblés de façon étanche par tout moyen classique, notamment par collage ou par soudage à chaud (thermosoudure). Le soudage des membranes 30a, 30b le long des bords 30-3, 30-4 peut notamment être effectué au moyen d'une pince chauffante au moment de l'assemblage de la serre, après découpe de la bâche 30.

En référence à nouveau à la figure 3A, le gonflage de la bâche 30 est assuré par un compresseur électrique 20 dont la sortie est reliée à un conduit 22 par l'intermédiaire d'un raccord 21 en "T". L'extrémité du conduit 22 traverse la membrane 30a par l'intermédiaire d'un joint d'étanchéité et débouche à l'intérieur de la bâche 30, du côté du bord fixe 30-1. L'autre branche du raccord 21 en "T" est connectée à un conduit 22' débouchant de façon similaire dans la bâche 30' (non représentée) qui recouvre l'autre moitié du faîtage.

Le compresseur 20 et les conduits 22, 22' sont de préférence agencés dans la partie haute de la serre afin de minimiser les pertes de charges et le nombre de coudes dans la tuyauterie. Le compresseur 20 est par exemple posé sur un socle porté par des traverses 12 et les conduits 22, 22' sont fixés à des traverses 12 par l'intermédiaire d'entretoises 23. Une sonde de pression 24 et une valve de décompression 25 sont également prévues, la sonde 24 permettant de contrôler la pression de gonflage des bâches 30, 30' et la valve 25 permettant de dégonfler les bâches 30, 30' au moment de leur enroulement. Ces éléments 24, 25 sont agencés ici dans une portion de tuyauterie commune aux deux bâches 30, 30' et permettent de contrôler simultanément le gonflage ou le dégonflage des deux bâches. Toutefois, chaque bâche 30, 30' peut également être équipée d'une sonde de pression et d'une valve de décompression individuelles s'il est souhaité pouvoir dérouler chaque bâche indépendamment de l'autre, ce qui implique l'ajout d'électrovannes pour isoler la tuyauterie de la bâche 30 et celle de la bâche 30'.

Lorsque le compresseur 20 est mis sous tension et injecte de l'air dans la bâche 30, celle-ci commence à se gonfler du côté de son bord fixe 30-1 qui est maintenu par la pièce 18. La partie gonflée pousse sur la partie: enroulée qui se déroule progressivement jusqu'à ce que l'axe d'enroulement 31 vienne en butée sous le chéneau central 15", comme cela est illustré en figure 3B. L'axe: 31 ne participe pas de façon active au déroulement de la bâche 30 et est simplement poussé vers le sommet de la serre. Lorsque le gonflage est terminé et que la bâche 30 est entièrement déroulée, la membrane 30a se trouve plaquée contre les arceaux 14 tandis que la membrane 30b se trouve plaquée contre les lanières 17 par la pression d'air. Le déroulement de la bâche 30' se produit simultanément au déroulement de la bâche 30, de la même manière et dans les mêmes conditions.

Ainsi, le mécanisme de déroulement d'une bâche selon l'invention est particulièrement simple et ne nécessite aucun mécanisme particulier autre que la prévision d'une bâche gonflable et d'un compresseur ou tout autre moyen d'injection d'air. Un tel compresseur peut en outre permettre de dérouler des bâches agencées sur d'autres serres, comme cela sera vu plus loin.

On a décrit dans ce qui précède un premier aspect de la présente invention qui consiste à dérouler par gonflage une bâche dont l'extrémité libre est solidaire d'un axe d'enroulement. Une telle bâche peut se dérouler seule sans mécanisme particulier et présente une bonne rigidité et une excellente tenue au vent lorsqu'elle est déroulée.

Un autre aspect de l'invention concerne l'enroulement de la bâche, cet aspect étant en soi indépendant du premier. Ainsi, la bâche décrite ci-dessus pourrait être enroulée manuellement. Toutefois, la recherche d'une serre pouvant être régulée en température de façon automatique nécessite la prévision d'un système d'enroulement motorisé. Un tel système d'enroulement peut par exemple comprendre une crémaillère qui assure le guidage et l'entraînement de l'axe d'enroulement en rotation et en translation. Toutefois, un tel système à crémaillère présente l'inconvénient d'être complexe et d'un prix de revient élevé.

Ici, l'idée de la présente invention est de prévoir un système d'enroulement à câbles de structure simple, dont un exemple sera décrit plus loin, qui assure uniquement la fonction d'enroulement de la bâche et fonctionne en "suiveur" pendant son déroulage. Il convient de noter qu'un tel système à câbles serait d'une grande complexité s'il devait assurer l'enroulement et le déroulement de la bâche, et doit sa simplicité au fait que le déroulement de la bâche est assuré par gonflage, conformément au premier aspect de l'invention. Selon l'invention, la fonction d'enroulement consiste à tirer l'axe d'enroulement dans la direction d'enroulement tout en le faisant tourner dans le sens d'enroulement.

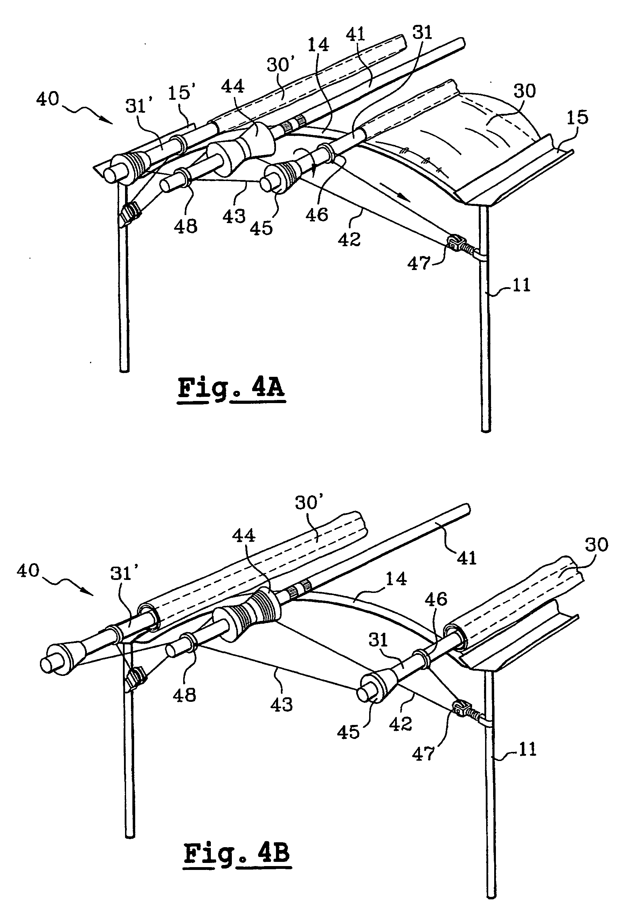

La figure 4A représente un exemple de réalisation d'un système d'enroulement 40 selon l'invention. Le système d'enroulement 40 comprend un arbre d'entraînement 41 agencé longitudinalement au sommet de la serre, un câble de traction 42, un câble de rotation 43, une poulie de traction 44 agencée à l'extrémité de l'arbre 41, et une poulie de rotation 45 agencée à l'extrémité de l'axe d'enroulement 31. Les poulies 44, 45 sont de préférence de forme tronconique. Le câble de traction 42 a une extrémité enroulée sur la poulie 44, à commencer par le petit diamètre de la poulie 44, et son autre extrémité est accrochée à l'axe d'enroulement 31 au moyen d'une bague 46 tournant librement sur l'axe 31, la bague 46 étant montée sur un roulement à bille ou agencée dans une gorge en Téflon®. Entre la poulie de traction 44 et la bague 46, le câble 42 est engagé dans une poulie de renvoi 47 agencée de manière qu'un enroulement du câble 42 autour de la poulie 44 se traduise par un mouvement de traction de l'axe 31 dans la direction d'enroulement. La poulie de renvoi 47 est par exemple fixée à un montant 11 de la serre, comme représenté sur la figure. Par ailleurs, le câble de rotation 43 a une extrémité enroulée autour de la poulie 45, à commencer par le grand diamètre de la poulie 45, et son autre extrémité est accrochée à l'arbre d'entraînement 41 au moyen d'une bague 48 tournant librement sur l'arbre 41.

Le système d'enroulement 40 comprend des éléments identiques pour l'enroulement de la bâche 3.0', qui ne seront pas décrit dans un souci de simplicité. Ainsi, comme cela est représenté plus en détail en figure 7, la poulie 44 est double et comprend deux troncs de cônes ayant leurs petits diamètres en regard, pour assurer la traction simultanée des deux axes d'enroulement 31, 31' au moyen de deux câbles. Chaque tronc de cône comprend une gorge de guidage de câble allant du petit diamètre vers le grand diamètre du tronc de cône. D'autre part, un système d'enroulement similaire au système 40 est agencé à l'autre extrémité de la serre (voir figure 2), c'est-à-dire aux autres extrémités de l'arbre 41 et des axes d'enroulement 31, 31' de chacune des bâches 30, 30', afin d'équilibrer les efforts de traction et d'enroulement.

Lorsque l'arbre 41 est entraîné en rotation dans le sens approprié, le câble 42 s'enroule autour de la poulie 44 et tire sur l'axe d'enroulement 31 par l'intermédiaire de la poulie de renvoi 47. Simultanément, le câble 43 se déroule autour de la poulie 45 en imposant à l'axe 31 un couple de rotation dans le sens d'enroulement, comme représenté par des flèches en figure 4A. En figure 4B, on aperçoit les bâches 30, 30' entièrement enroulées sur leurs axes 31, 31'. L'extrémité du câble 42 se trouve entièrement enroulée sur la poulie 44 du côté de son grand diamètre et l'extrémité du câble 43 se trouve entièrement déroulée sur la poulie 45 du côté de son petit diamètre. La prévision de poulies tronconiques 44, 45 est une caractéristique optionnelle de l'invention qui permet de compenser l'accroissement de l'épaisseur de la bâche 30 au fur et à mesure de son enroulement, de sorte que l'arbre d'entraînement 41 tourne à vitesse angulaire constante pour une vitesse d'enroulement donnée.

Sur la figure 2, on voit que l'arbre d'entraînement 41 est mû par un moteur 60 agencé dans une partie centrale de la serre, le moteur 60 étant par exemple posé sur une plate-forme accrochée aux traverses de la structure de serre. Ce moteur 60 comprend un moto-réducteur intégré qui présente un palier d'entraînement traversé par l'arbre 41. On voit en figure 3A que d'autres paliers 61 portant l'arbre 41 sont fixés aux arceaux 14 sous le chéneau central 15", les paliers 61 et l'arbre 41 étant ainsi protégés des intempéries par le chéneau 15".

Le système d'enroulement 40 selon l'invention est bien entendu susceptible de diverses variantes et modes de réalisation. Notamment, sur la figure 4A, la bague 46 pourrait être remplacée par une poulie à diamètre constant imprimant un mouvement de rotation à l'axe 31 lorsque le câble 42 est tiré par la poulie 44. Dans ce cas, les positions respectives de la bague 48 et de la poulie 45 pourraient être interverties, la bague 48 étant agencée sur l'axe 31 et la poulie 45 agencée sur l'arbre 41. La poulie 45 ne serait pas dans ce cas une poulie de rotation mais une poulie suiveuse. Par ailleurs, la position centrale de l'arbre 41 au sommet de la serre est justifiée ici par un souci de simplicité du système d'enroulement et par la nécessité d'enrouler simultanément les deux bâches 30, 30'. Le faîtage d'une serre selon l'invention pourrait toutefois être revêtu d'une seule bâche enroulable. Dans ce cas, l'arbre d'entraînement 41 pourrait être agencé sur les bords du faîtage.

Diverses autres variantes de la présente invention sont également envisageables en ce qui concerne la structure de la serre et celle de la bâche gonflable. Notamment, une variante consiste à prévoir une bâche qui présente une alternance de parties gonflables à double membrane et de parties non gonflables (à simple ou à double membrane). Par exemple, deux parties gonflables agencées latéralement suffisent pour assurer le déroulement d'une bâche selon l'invention. Les parties gonflables doivent s'étendre entre le bord fixe et le bord libre de la bâche pour assurer son déroulement: complet. D'autre part, une bâche enroulable selon l'invention peut également servir à couvrir une serre du type tunnel, dont la structure ne comprend pas de parois verticales et ne comprend que des arceaux. Enfin, notamment dans une serre de type tunnel, le déroulement de la bâche par gonflage peut être prévu dans un sens allant du bas vers le haut ou du haut vers le bas.

En pratique, les divers éléments d'enroulement et de déroulement des bâches 30, 30' selon l'invention sont contrôlés par un système de régulation équipé d'au moins une sonde de température. En cas de température excessive dans la serre, le système de régulation active le moteur 60 pour enrouler progressivement les bâches tout en ouvrant la valve de décompression 25 afin de permettre aux bâches de se dégonfler. L'ouverture de la serre peut être complète ou partielle en fonction de la température extérieure, et peut être faite par paliers de plusieurs minutes. Inversement, lorsque la température de la serre devient trop basse, le système de régulation active le compresseur 20 pour dérouler les bâches. Dans ce cas, le moteur 60 est simultanément activé dans un sens de rotation inverse au sens d'enroulement de manière que les câbles de traction et de rotation suivent le mouvement de fermeture des bâches. Le système de régulation active également le compresseur 20 lorsque la pression d'air dans les bâches devient trop faible, en raison de micro-fuites pouvant survenir dans les bâches ou dans le système de distribution d'air. Divers autres moyens de régulation, notamment une sonde de pluie et un anémomètre peuvent être prévus pour assurer une protection accrue des espèces cultivées, notamment en cas de mauvais temps.

Par ailleurs, un seul compresseur peut permettre de piloter les bâches de plusieurs serres contiguës si une économie de moyens est souhaitée. Ainsi, comme représenté en figure 8, plusieurs serres selon l'invention, ici trois serres 10, 10', 10", peuvent être agencées côte à côte pour partager une compresseur commun. La fermeture des bâches de chacune des serres est en outre assurée par un seul moteur 60, disposé ici dans la serre centrale 10, et les arbres d'entraînement 41', 41" des serres voisines 10', 10" sont couplés à l'arbre 41 de la serre centrale 10 par une chaîne ou par une courroie d'entraînement 62.

Le système de bâche selon l'invention est bien entendu susceptible de diverses autres variantes et applications. Notamment, des bâches opaques se déroulant par gonflage peuvent être agencées sous la bâche transparente du faîtage d'une serre pour former des pare-soleil que l'on déroule lorsque la lumière solaire devient trop forte pour les espèces cultivées.

De plus, bien que le mode de réalisation préféré de la présente invention consiste dans le fait d'utiliser la pression d'air pour assurer le déroulement d'une bâche tout en prévoyant un mécanisme simplifié n'assurant que l'enroulement de la bâche, il entre également dans le cadre de la présente invention de prévoir un mécanisme assurant à la fois l'enroulement et le déroulement de la bâche. Dans un tel mode de réalisation, le gonflage de la bâche pendant son déroulement intervient en tant que moyen complémentaire permettant de réduire le travail de déroulement effectué par le mécanisme d'enroulement et de déroulement.

## Revendications

1. Système de bâche enroulable, **caractérisé en ce qu'**il comprend :
- une bâche (30) du type gonflable à double membrane (30a, 30b) et un axe (31) d'enroulement de la bâche, la bâche présentant un bord fixe (30-1) et une extrémité libre (30-2) solidaire de l'axe d'enroulement (31), la bâche pouvant occuper une position enroulée autour de l'axe d'enroulement et une position déroulée,
- des moyens (20) pour fournir une pression de gonflage de la bâche, et
- des moyens (22) pour injecter la pression de gonflage au voisinage du bord fixe de la bâche, de telle sorte qu'une partie non enroulée de la bâche située du côté de la partie fixe gonfle sous l'effet de la pression et pousse la partie enroulée de la bâche, en provoquant le déroulement de la bâche et le déplacement de l'axe d'enroulement (31), le déroulement de la bâche étant ainsi assuré en tout ou en partie par gonflage de la bâche.

2. Système selon la revendication 1, **caractérisé en ce que** toute la surface utile de la bâche (30) est du type gonflable à double membrane.

3. Système selon la revendication 1, **caractérisé en ce que** la bâche comprend au moins une partie non gonflable et au moins une partie gonflable à double membrane s'étendant entre le bord fixe (30-1) et l'extrémité libre (30-2) de la bâche.

4. Système selon l'une des revendications 1 à 3, **caractérisé en ce que** l'enroulement de la bâche est assuré par un système (40) à câbles (42, 43) agencé pour tirer l'axe d'enroulement (31) dans une direction d'enroulement de la bâche tout en faisant tourner l'axe d'enroulement dans un sens d'enroulement de la bâche.

5. Serre horticole (10), **caractérisé en ce qu'**elle comprend au moins un système de bâche (30) selon l'une des revendications 1 à 4, le bord fixe (30-1) de la bâche étant solidaire de la structure (11, 12, 13, 14) de la serre.

6. Serre (10) selon la revendication 5, **caractérisée en ce que** la bâche repose sur des éléments (14) du faîtage de la serre et est plaquée contre ces éléments par des moyens de maintien (17).

7. Serre selon les revendications 5 et 6, **caractérisée en ce qu'**elle comprend un système (40) d'enroulement de la bâche (30) comprenant un câble de traction (42) pour tirer l'axe d'enroulement (31) dans une direction d'enroulement de la bâche, et un câble de rotation (43) pour faire tourner l'axe d'enroulement dans un sens d'enroulement de la bâche.

8. Serre selon la revendication 7, **caractérisée en ce que** les câbles de traction (42) et de rotation (43) coopèrent en enroulement avec des poulies (44, 45) choisies de forme tronconique pour compenser l'épaisseur croissante de la bâche (30) lors de son enroulement autour de l'axe d'enroulement (31).

9. Serre selon l'une des revendications 7 et 8, **caractérisée en qu'**elle comprend :
- au moins un compresseur (20) pour le déroulement de la bâche par gonflage,
- des moyens (24) de contrôle de la pression d'air dans la bâche,
- au moins une valve (25) de décompression de la bâche,
- au moins un moteur électrique (60) pour entraîner le système d'enroulement (40), et
- des moyens de régulation de la température de la serre, pilotant le compresseur (20), le moteur (60) et la valve (25) pour enrouler ou dérouler la bâche (30) en fonction de l'écart entre la température dans la serre et une température souhaitée.

10. Ensemble de serres comprenant au moins deux serres (10, 10', 10") selon l'une des revendications 7 à 9, **caractérisé en ce que** les serres comprennent des arbres (41, 41', 41") d'entraînement de systèmes d'enroulement de bâches (40) qui sont couplés en rotation au moyen d'une courroie ou d'une chaîne (62).

## Patentansprüche

1. System mit aufrollbarer Abdeckplane, **dadurch gekennzeichnet, dass** es Folgendes umfasst:
- eine aufblasbare Abdeckplane (30) mit doppelter Folie (30a, 30b) und eine Spindel (31) zum Aufwickeln der Abdeckplane, wobei die Abdeckplane einen feststehenden Rand (30-1) und ein freies Ende (30-2), das fest mit der Aufwickel-Spindel (31) verbunden ist, aufweist, wobei die Abdeckplane eine um die Aufwickel-Spindel aufgewickelte Position und eine abgewickelte Position einnehmen kann,
- Mittel (20), um einen Druck zum Aufblasen der Abdeckplane zu liefern, und
- Mittel (22), um den Druck zum Aufblasen in der Nähe des feststehenden Randes der Abdeckplane derart einzublasen, dass ein nicht aufgewickelter Teil der Abdeckplane, der seitwärts des feststehenden Randes angeordnet ist, sich unter der Wirkung des Druckes füllt und gegen den aufgewickelten Teil der Abdeckplane drückt, so dass das Abwickeln der Abdeckplane und die Verlagerung der Aufwickel-Spindel (31) bewirkt wird, wobei so das Abwickeln der Abdeckplane insgesamt oder teilweise durch Aufblasen der Abdeckplane gewährleistet wird.

2. System nach Anspruch 1, **dadurch gekennzeichnet, dass** die gesamte Nutzfläche der Abdeckplane (30) mit doppelter Folie aufblasbar ist.

3. System nach Anspruch 1, **dadurch gekennzeichnet, dass** die Abdeckplane wenigstens einen nicht aufblasbaren Teil und wenigstens einen aufblasbaren Teil mit doppelter Folie umfasst, die sich zwischen dem feststehenden Rand (30-1) und dem freien Ende (30-2) der Abdeckplane erstrecken.

4. System nach einem der Ansprüche 1 bis 3, **dadurch gekennzeichnet, dass** das Aufwickeln der Abdeckplane durch ein System (40) von Kabeln (42, 43) gewährleistet wird, das angebracht ist, um die Aufwickel-Spindel (31) in eine Richtung zum Aufwickeln der Abdeckplane zu ziehen, wobei dabei noch die Aufwickel-Spindel in eine Aufwickelrichtung der Abdeckplane gedreht wird.

5. Gartenbau-Gewächshaus (10), **dadurch gekennzeichnet, dass** es wenigstens ein Abdeckplanen-System (30) nach einem der Ansprüche 1 bis 4 umfasst, wobei der feststehende Rand (30-1) der Abdeckplane fest mit der Struktur (11, 12, 13, 14) des Gewächshauses verbunden ist.

6. Gewächshaus (10) nach Anspruch 5, **dadurch gekennzeichnet, dass** die Abdeckplane auf Elementen (14) des Firstes des Gewächshauses ruht und von Haltemitteln (17) gegen diese Elemente angedrückt wird.

7. Gewächshaus nach den Ansprüchen 5 und 6, **dadurch gekennzeichnet, dass** es ein System (40) zum Aufwickeln der Abdeckplane (30) umfasst, das ein Zugkabel (42) umfasst, um die Aufwickel-Spindel (31) in eine Richtung zum Aufwickeln der Abdeckplane zu ziehen, und ein Drehkabel (43), um die Aufwickel-Spindel in eine Aufwickelrichtung der Abdeckplane zu drehen.

8. Gewächshaus nach Anspruch 7, **dadurch gekennzeichnet, dass** das Zugkabel (42) und das Drehkabel (43) beim Aufwickeln mit Rollen (44, 45) zusammenwirken, für die eine kegelstumpfartige Form gewählt ist, um die zunehmende Dicke der Abdeckplane (30) bei deren Aufwickeln um die Aufwickel-Spindel (31) zu kompensieren.

9. Gewächshaus nach einem der Ansprüche 7 und 8, **dadurch gekennzeichnet**, das es Folgendes umfasst:
- wenigstens einen Kompressor (20) zum Abwickeln der Abdeckplane durch Aufblasen,
- Mittel (24) zum Steuern des Luftdruckes in der Abdeckplane,
- wenigstens ein Ventil (25) zur Dekompression der Abdeckplane,
- wenigstens einen Elektromotor (60), um das Aufwickelsystem (40) anzutreiben, und
- Mittel zum Regulieren der Temperatur des Gewächshauses, die den Kompressor (20), den Motor (60) und das Ventil (25) ansteuern, um die Abdeckplane in Abhängigkeit von der Abweichung der Temperatur im Gewächshaus von einer Solltemperatur auf- oder abzuwickeln.

10. Komplex von Gewächshäusern mit wenigstens zwei Gewächshäusern (10, 10', 10'') nach einem der Ansprüche 7 bis 9, **dadurch gekennzeichnet, dass** die Gewächshäuser Wellen (41, 41', 41'') zum Antrieb von Abdeckplanen-Aufwickelsystemen (40) umfassen, die mit Hilfe eines Riemens oder einer Kette (62) drehbar gekoppelt sind.

## Claims

1. Roll-up cover system, **characterised in that** it comprises:
- a tarpaulin (30) of the double-membrane inflatable type (30a, 30b) and a shaft (31) for winding the tarpaulin, the tarpaulin having a fixed edge (30-1) and a free end (30-2) secured to the winding shaft (31), it being possible for the tarpaulin to be in a position wound around the winding shaft and an unwound position,
- means (20) for supplying pressure for inflating the tarpaulin, and
- means (22) for injecting the inflation pressure in the vicinity of the fixed edge of the tarpaulin, so that a non rolled-up portion of the tarpaulin, located on the side of the fixed portion, inflates under the influence of the pressure and pushes the rolled-up portion of the tarpaulin, causing the tarpaulin to unwind and the winding shaft (31) to move, the unwinding of the tarpaulin thus being carried out, either wholly or in part, by inflating the tarpaulin.

2. System according to claim 1, **characterised in that** the entire useable surface of the tarpaulin (30) is of the double-membrane inflatable type.

3. System according to claim 1, **characterised in that** the tarpaulin comprises at least one non-inflatable portion and at least one double-membrane inflatable portion stretching between the fixed edge (30-1) and the free end (30-2)of the tarpaulin.

4. System according to one of claims 1 to 3, **characterised in that** the winding of the tarpaulin is carried out by a rope (42, 43) system (40) arranged to pull the winding shaft (31) in a winding direction of the tarpaulin while turning the winding shaft in a winding direction of the tarpaulin.

5. Horticultural greenhouse (10), **characterised in that** it comprises at least one cover system (30) according to one of claims 1 to 4, the fixed edge (30-1) of the tarpaulin being secured to the frame (11, 12, 13, 14) of the greenhouse.

6. Greenhouse (10) according to claim 5, **characterised in that** the tarpaulin rests on elements (14) of the ridge of the greenhouse and is pressed against these elements by holding means (17).

7. Greenhouse according to claims 5 and 6, **characterised in that** it comprises a system (40) for winding the tarpaulin (30) comprising a traction rope (42) to pull the winding shaft (31) in a winding direction of the tarpaulin, and a rotation rope (43) to make the winding shaft turn in a winding direction of the tarpaulin.

8. Greenhouse according to claim 7, **characterised in that** the traction (42) and rotation (43) ropes cooperate in winding with pulleys (44, 45) chosen to be tapered in shape to compensate for the increasing thickness of the tarpaulin (30) when it is being wound around the winding shaft (31).

9. Greenhouse according to one of claims 7 to 8, **characterised in that** it comprises:
- at least one compressor (20) to unwind the tarpaulin by inflating,
- means (24) for controlling the air pressure in the tarpaulin,
- at least one tarpaulin decompression valve (25) ,
- at least one electrical motor (60) to drive the winding system (40), and
- means for adjusting the temperature in the greenhouse, driving the compressor (20), the motor (60) and the valve (25) to roll up or unwind the tarpaulin (30) depending on the difference between the temperature in the greenhouse and a desirable temperature.

10. Set of greenhouses comprising at least two greenhouses (10, 10', 10") according to one of claims 7 to 9, **characterised in that** the greenhouses comprise shafts (41, 41', 41") for driving tarpaulin winding systems (40) that are rotationally coupled by means of a belt or a chain (62).
